Europäisches Patentamt

**European Patent Office**

**Office européen des brevets**

(11) Publication number: **0 075 305**
**B1**

## (12) EUROPEAN PATENT SPECIFICATION

(45) Date of publication of patent specification: **23.07.86**

(51) Int. Cl.⁴: **H 04 Q 11/04**

(21) Application number: **82108664.2**

(22) Date of filing: **20.09.82**

(54) Composite concentration system.

(30) Priority: **18.09.81 JP 147573/81**

(43) Date of publication of application:
**30.03.83 Bulletin 83/13**

(45) Publication of the grant of the patent:
**23.07.86 Bulletin 86/30**

(84) Designated Contracting States:
**BE DE FR GB SE**

(56) References cited:
**FR-A-2 331 929**
**FR-A-2 332 669**
**FR-A-2 408 963**
**GB-A-2 014 018**

**PATENTS ABSTRACTS OF JAPAN, vol. 5, no. 34(E-4)(706), 4th March 1981**

**PATENTS ABSTRACTS OF JAPAN**

**INTERNATIONAL SWITCHING SYMPOSIUM, 25th-29th October 1976, vol. 2, pages 421.3.1 - 421.3.7, JP., M. REVEL: "Subscriber connecting equipment"**

(73) Proprietor: **Nippon Telegraph and Telephone Corporation**
**1-6 Uchisaiwaicho 1-chome Chiyoda-ku Tokyo (JP)**

(73) Proprietor: **NEC CORPORATION**
**33-1, Shiba 5-chome, Minato-ku Tokyo 108 (JP)**

(73) Proprietor: **Hitachi, Ltd.**
**5-1, Marunouchi 1-chome Chiyoda-ku Tokyo 100 (JP)**

(73) Proprietor: **Oki Electric Industry Company, Limited**
**7-12, Toranomon 1-chome Minato-ku Tokyo 105 (JP)**

(73) Proprietor: **FUJITSU LIMITED**
**1015, Kamikodanaka Nakahara-ku Kawasaki-shi Kanagawa 211 (JP)**

(72) Inventor: **Yasui, Tadahiko**
**1-12-303, Takiyama 3-chome Higashikurume-shi Tokyo (JP)**
Inventor: **Ito, Shizuo**
**16-2, Baba 1-chome Tsurumi-ku Yokohama-shi Kanagawa-ken (JP)**
Inventor: **Horiki, Akira**
**4338, Kamariya-cho Kanazawa-ku Yokohama-shi Kanagawa-ken (JP)**

Courier Press, Leamington Spa, England.

**0 075 305**

(56) References cited:
PATENTS ABSTRACTS OF JAPAN, vol. 4, no. 170(E-35)(652). 22nd November 1980

INTERNATIONAL CONFERENCE ON COMMUNICATIONS, vol. 1, 8th-12th June 1980, pages 1.6.1 - 1.6.6, Seattle, USA, K. YASUDA et al.: "Design and performance of subscriber line interface module for digital switching system"

INTERNATIONAL CONFERENCE ON COMMUNICATIONS, vol. 1, 8th-12th June 1980, pages 18.3.1 - 18.3.7, Seattle, USA, W.S. JINBO et al.: "GTD-5 EAX hardware description"

IEEE JOURNAL OF SOLID-STATE CIRCUITS, vol. SC-16, no. 4, August 1981, pages 247-252, New York, USA S.D. ROSENBAUM: "Special IC's in digital switching - An overview"

(72) Inventor: Yamada, Hajime
19-21, Oyamadai 2-chome
Setagaya-ku Tokyo (JP)
Inventor: Usami, Takashi
5-23, Tsukushino 2-chome
Machida-shi Tokyo (JP)

(74) Representative: Kehl, Günther, Dipl.-Phys. et al
Patentanwälte GEYER, HAGEMANN & KEHL
Ismaninger Strasse 108 Postfach 86 03 29
D-8000 München 86 (DE)

## Description

### Background of the invention

This invention relates to a composite concentration system having a time division concentration switch collecting or distributing signals from or to subscriber lines, partially via space division concentration switches.

### Description of the prior art

A concentration system of the above-mentioned kind is known from "International Switching Symposium, 1976, volume 2, pages 421.3.1—421.3.7". There is disclosed, as an example, a method of construction by combining secondarily a time division to the primary space division, and there is further described a method of directly connecting subscriber lines to time divided concentrated lines, wherein the subscriber lines are concentrated through a remote or local space division line concentration device before they are linked with the time divided concentrated lines. This reference certainly teaches that it is possible to benefit from the technical and economical advantages of both space-division and time-division solutions. However if it becomes necessary to change the concentration system in accordance with the variation of the call rate of some subscribers it is necessary not only to exchange substrates but also to change wirings resulting from the exchange of the substrates. Such operation requires much labor, time and test after modification.

Japanese Preliminary Patent Publication No. JP—A—55-161 493 teaches a concentration system having a time division line concentration system, a space division line concentration system and a line concentration system in which time division additionally follows the primary line concentration. The systems are selectively utilised, depending on the subscriber call ratio. There is disclosed the segregating of subscribers into a plurality of groups. This system, too, cannot be adapted to a variation of the required service, for instance to a variation of the call rate of some of the subscribers.

### Summary of the invention

Accordingly it is the principle object of this invention to provide a novel line concentration system having versatility for variations in the percentage of calls and service and economy and which can be expanded by using common component parts.

To accomplish this object the composite concentration system comprises:

a) a first subscriber line interface circuit means of a first type which connects subscriber's lines directly to subscriber line interface circuits, the subscriber line interface circuit means of the first type comprising a number of input terminals directly connected to respective subscriber line interface circuits;

b) a second subscriber line interface circuit means of a second type which connects subscriber's lines to subscriber line interface circuits via one of said space division concentration switches, the subscriber line interface circuit means of the second type comprising a number of input terminals connected to respective input terminals of said one of said space division concentration switches, said one of said space division concentration switches, and subscriber line interface circuits connected to respective outputs of said one of said space division concentration switches;

c) the number of the input terminals of said first subscriber line interface circuit means being equal to that of input terminals of said second subscriber line interface circuit means, the subscriber line interface circuit means of the first and second type being in the form of plug-in units which are interchangeably connectible to said number of subscriber's lines;

d) each of said subscriber line interface circuits in each of said first and second subscriber line interface circuit means including means for converting a voice signal in analogue form applied to one of said input terminals into a digitized signal and converting a digitized signal from said time division concentration switch into a voice signal in analogue form; and

e) a switching interface means for assigning digitized signals from said subscriber line interface circuits to channels to be sent to said time division concentration switch and for assigning said digitized signals from said time division concentration switch to respective ones of said subscriber line interface circuits.

### Brief description of the drawings

In the accompanying drawings:

Figure 1 is a block diagram showing one embodiment of the composite concentration system according to this invention;

Figure 2 is a perspective view showing the output terminals of the subscriber line interface circuit means of the first and second type utilized in the system shown in Fig. 1;

Figure 3 is a timing chart showing the relationship between signals sent and received at the output terminals of respective subscriber line interface circuit means shown in Fig. 2 and signals sent and received by an interface;

Fig. 4 is a block diagram showing one example of the subscriber line interface circuit means of the first type utilized in the system shown in Fig. 1 and incorporated with an interface;

Fig. 5 is a block diagram showing one example of the subscriber line interface circuit means of the second type utilized in the system shown in Fig. 1 and incorporated with the interface;

Figs. 6a and 6b are perspective views showing examples of frame structures mounted with the system of this invention;

Fig. 7 is a block diagram showing a modified embodiment of the composite concentration system embodying the invention;

Fig. 8 is a block diagram showing still another embodiment of this invention; and

Figs. 9a and 9b are perspective views showing examples of exchanging the connection of important subscribers.

Description of the preferred embodiments

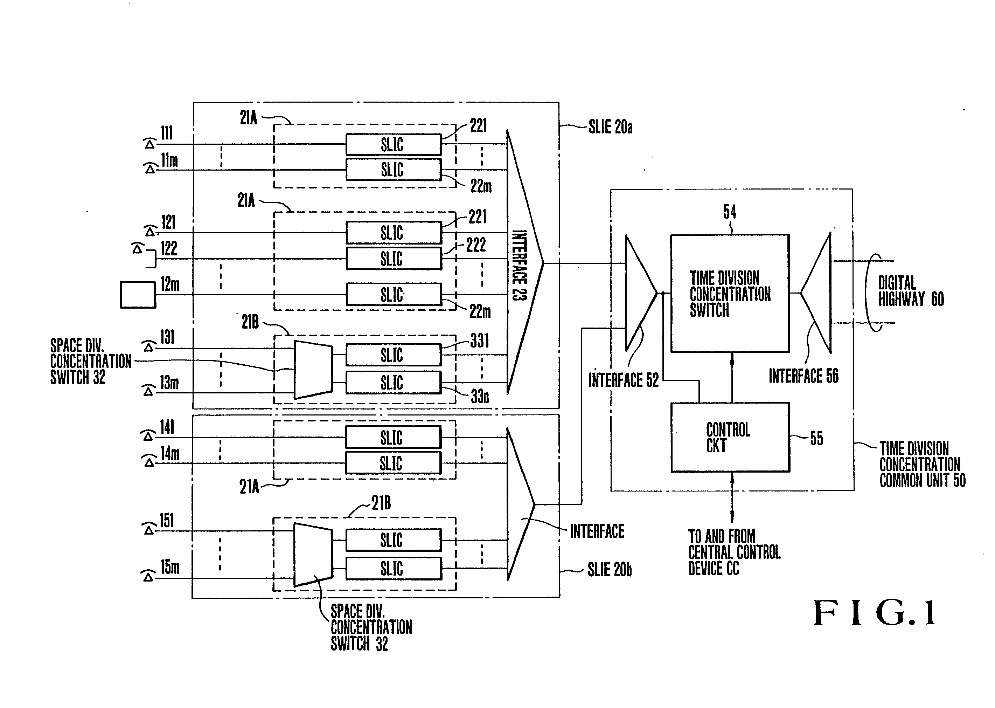

A composite concentration system of this invention shown in Fig. 1 comprises a plurality of subscriber's line interface equipments (SLIE) 20a and 20b connected to respective subscriber's terminals $11_1$—$11_m$, $12_1$—$12_m$, $13_1$—$13_m$, $14_1$—$14_m$, $15_1$—$15_m$, and a time division concentration common unit 50 commonly connected to respective SLIEs, and the common unit 50 is connected to a digital highway 60 acting as time division talking channels.

The SLIEs 20a and 20b will now be described by taking the SLIE 20a as an example. The SLIE 20a characterizing the invention is constituted by two types of subscriber line interface circuit means 21A and 21B and an interface 23. In this example, the SLIE 20a is constituted by two subscriber line interface circuit means 21A of the first type and one subscriber line interface circuit means 21B of the second type, while the interface 23 is commonly used for these circuit means 21A and 21B. Each of the subscriber line interface circuit means 21A and 21B ·has common input/output conditions. More particularly, the number of the subscriber's terminals connected to the input side of each of the subscriber line interface circuit means 21A and 21B is the same (in this example m=8). The subscriber line interface circuit means 21A of the same first type does not have concentrating performance and has m output terminals, that is output line of the same number as on the input side and the output terminals are connected to the interface according to an aligned order. The subscriber line interface circuit means 21A sequentially assign signals on respective output lines to one of a plurality of channels constituting one frame, or sequentially receives the signals of the plurality of channels on the output lines.

The subscriber line interface circuit means 21B of the second type has a concentration performance so that its output terminals are concentrated to n (in this example 2) lesser than m on the input side. However, these output terminals are designed such they are connected to the interface 23 and assigned to n of the time channels of the same timings as those of the respective time channels of the subscriber line interface circuit means 21A of the first type.

The subscriber line interface circuit means 21A and 21B will be described in more detail.

The subscribers line interface circuit means 21A is provided with subscriber line interface circuits SLICs $22_1$—$22_m$ respectively, directly connected to m subscriber's lines or subscriber's terminals $11_1$—$11_m$ or $12_1$—$12_m$. In this case, the subscriber's terminals include such terminals as for usual residences for public telephone sets, common telephone sets, PBX, key telephone sets, subscribers having common telephone numbers and a high percentage of calls, digital facsimiles, digital data interdigital telephone sets and emergency telephone sets.

Each of the subscriber line interface circuits $22_1$—$22_m$ functions to assign to a predetermined traffic connected to respective subscriber's lines, vice versa. Consequently, each of these subscriber line interfaces circuits $22_1$—$22_m$ has a performancee of a well known subscriber's line signal transmitting and receiving trunk device which has been used for a usual space division type telephone set and a PCM channel encoding performance that converts such analog signals as voice signals into digital signals. That is, each of the subscriber line interface circuits $22_1$—$22_m$ has a so-called BORSCHT performance which is an abbreviation of *b*attery (source supply), *o*verload protection, *r*inging (ringing signal supply), *s*uper-vision, *c*odes (encoding and decoding performances), *h*ybrid (two wire- four wire transformer and *t*est (subscriber's line testing performance). The use of such a term is disclosed in I.E.E.E. Spectrum, 1977, Feb., page 46, for example. The component parts for realizing such a BORSCHT performance are required to have strict electric characteristics. For example, due to leakage, a voltage of 350V, and a current of 200mA are applied to component parts. For this reason, component elements having high voltage durability and large power ratings are required. With recent · developments in electronics, however, miniaturized and integrated thyristor switch elements satisfying above described requirements have been developed.

The output terminals of the subscriber line interface circuits $22_1$—$22_m$ having the BORSCHT performance described above are connected to the interface 23 that multiplexes and demultiplexes voice signals and control signals. In this case, a predetermined channel is used between respective output terminals of the subscriber line interface circuits $22_1$—$22_m$ and the interface 23 for transmitting and receiving the voice signals and the control signals.

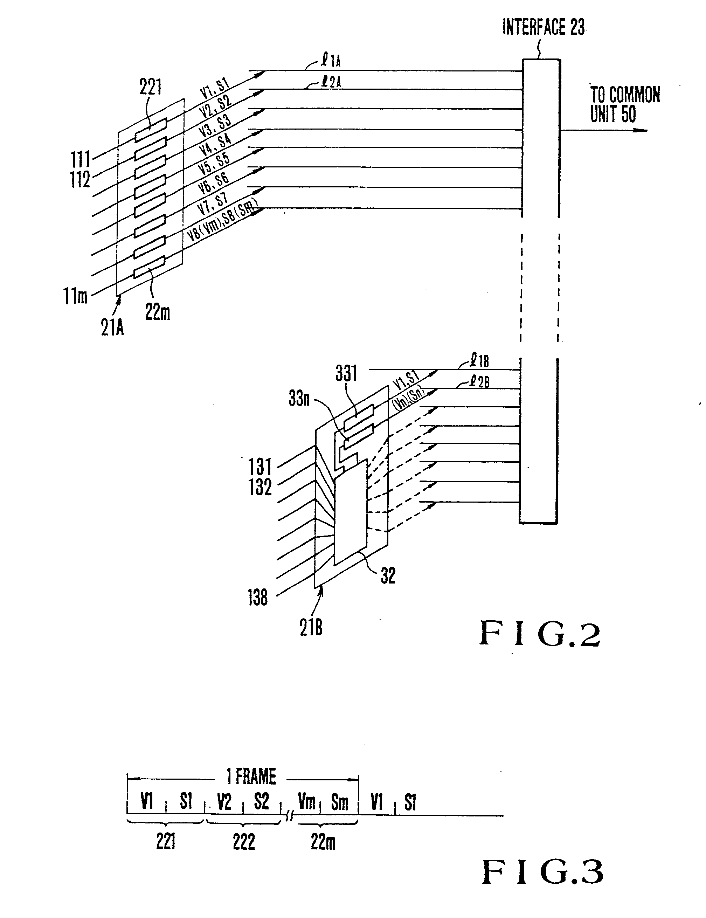

Fig. 2 illustrates channel assignment relations between the output terminals of respective subscriber line interface circuits $22_1$—$22_m$ and the interface 23, in which letters $V_1$, $V_2$... applied to the output sides of respective subscriber line interface circuits $22_1$—$22_m$ represent voice signals, and $S_1$, $S_2$... represent control signals. These signals are assigned to respective channels according to the timing shown in Fig. 3 to be sent to the common unit 50 in a succeeding stage. As can be noted from Fig. 3, the fact that the output conditions of respective subscriber line interface circuit means are the same means that in each circuit means the number of channels constituting one frame are the same. The output terminals of each circuit means are sequentially assigned to corresponding channels according to an aligned order. Further, as Fig. 3 shows, a voice signal and a control signal corresponding to one subscriber line interface circuit are assigned to adjacent channels. For example, adjacent to a channel to which the voice signal $V_1$ at an output terminal of the subscriber line interface circuit $22_1$, is provided a channel for its control signal $S_1$.

The subscriber line interface circuit means 21B of the second form comprises a one stage space division type concentration switch 32 having a concentration ratio of n/m and having input side connected to m subscriber's lines that is the subscriber's terminals $13_1$—$13_m$, and n (in this example 2) subscriber line interface circuits $33_1$ and $33_2$ connected to the output side of the concentration switch 32.

These subscriber line interface circuits $33_1$ through $33_n$ are identical or substantially identical to the subscriber line interface circuits $22_1$—$22_m$ described above and have aforementioned BORSCHT performance.

The output terminals of the subscriber line interface circuits $33_1$ through $33_n$ are connected to the interface 23 which multiplexes and demultiplexes the voice signal and the control signal. In this case, a predetermined channel is connected between the output terminals of the subscriber line interface circuits and the interface 23 for transmitting and receiving the voice signal and the control signal.

In the system having the construction described above, when a terminal $11_1$ for example of a telephone set calls, a voice signal $V_1$ and a control signal $S_1$ are sent to the interface 23 acting as the multiplexing and demultiplexing circuit. The multiplexed signals are sent to an interface 52 acting as a multiplexing and demultiplexing circuit where the signals are further multiplexed together with SLIE 20b and other informations. Among the multiplexed informations sent out from the interface 52, the voice signal information signal is sent to a time division concentration switch 54, while the control signal or information is sent to a control circuit 55 and to a central control device CC, not shown. The voice information collected or distributed by the time division concentration switch 54 is sent out to the digital highway 60 via an interface 56 acting as a multiplexing and demultiplexing circuit.

Conversely, the voice information $V_1$ directed to the telephone set terminal $11_1$ is sent to the subscriber line interface circuit means 21A of the first type via the digital highway 60, interface 56, time division concentration switch 54 and interfaces 52 and 23. The control information $S_1$ corresponding to the voice information $V_1$ is sent from the central control device CC to the subscriber line interface circuit $22_1$ via the control circuit 55 and interfaces 52 and 23 so as to control the subscriber line interface circuit $22_1$ for sending the voice information to the telephone set terminal $11_1$. Since the method of processing the voice information sent from the telephone set terminal $11_1$ to the digital highway 60 or vice versa is well known it will not be described herein.

In this system, it is to be particularly noted that the subscriber line interface circuit means 21A has no concentration performance but directly connects the subscriber's terminal to the subscriber line interface circuit for forming a time division signal to be assigned to a predetermined time slot or channel, and that whereas the subscriber line interface circuit means 21B operates such that after concentrating the lines with a one stage space division concentration switch, it connects the line to the subscriber line interface circuit to obtain a time division signal assigned to a predetermined time slot or channel. The use of such two types of the subscriber line interface circuit means enables to standardize the construction of the subscriber line interface circuit so as to meet various requirements, thus eliminating any special change in the design and wiring.

It is also to be noted that the input/output conditions for the subscriber line interface circuit means 21A and 21B are uniform. More particularly, each of these subscriber line interface circuit means is constructed such that m subscriber's terminals are connected to its input terminals.

Since the subscriber line interface circuit means 21A of the first type is connected directly to a subscriber line interface circuit, the number of its output terminals is the same as that of the input terminals, that is m. At these output terminals, voice and control informations are generated at predetermined timings which are assigned to predetermined adjacent channels when these informations are multiplexed in pairs. Accordingly, when viewed from the input side of the time division concentration switch 54 of the common unit 50 it will be clear that signals at the output terminals of the subscriber line interface circuit means 21A of the first type are assigned to predetermined channels according to the same order as the signals appearing at the output terminals of the other subscriber line interface circuit means 21B.

The same is true for the subscriber line interface circuit means 21B of the second type. More particularly, the number of the subscriber's terminal is the same as that of the subscriber line interface circuit means 21A, that is m. After being concentrated to a number n (in this example 2) by the space division concentration switch 32, the terminals are connected to the subscriber line interface circuits $33_1$ through $33_n$. Consequently, although the number of the output terminals of this subscriber line interface circuit means 21B is n, the voice and control informations appearing thereon are assigned to the same channels to which informations of the subscriber line interface circuit means 21A have been assigned. As a consequence, where the space division concentration switch 32 has a concentration ratio of 1:1, the informations at respective output terminals are assigned to the same channel according to their order as that to which the informations of the subscriber line interface circuit means 21A have been assigned.

Consequently, the subscriber line interface circuit means 21A and 21B are exchangeable. Thus, when these circuit means are formed into plug-in type packages in which each circuit means is fabricated on a single printed substrate, the concentration system can be changed by merely substituting one substrate with the other.

This will be described with reference to Fig. 2. For example, when the percentage of calls lost for subscriber's terminals on which the subscriber line interface circuit means 21B has been mounted exceeds a predetermined ratio and the concentration ratio of the space division concentration switch 32 has decreased, but still large percentage of call loss appears, the subscriber line interface circuit means 21B of the second type is replaced by the subscriber line interface circuit means 21A of the first type. In this case, to the input lines $I_{1B}$ of the interface 23 to which informations $(V_1, S_1)$ at the output terminals of the present circuit means 21B have been applied, will be connected to the output terminals which transmit and receive the informations $(V_1, S_1)$ of the circuit means 21A which are sent out at the same timings. As a consequence, even when the subscriber line interface circuit means are exchanged, signals appearing on the multiplexed output side of the interface 23 would not change.

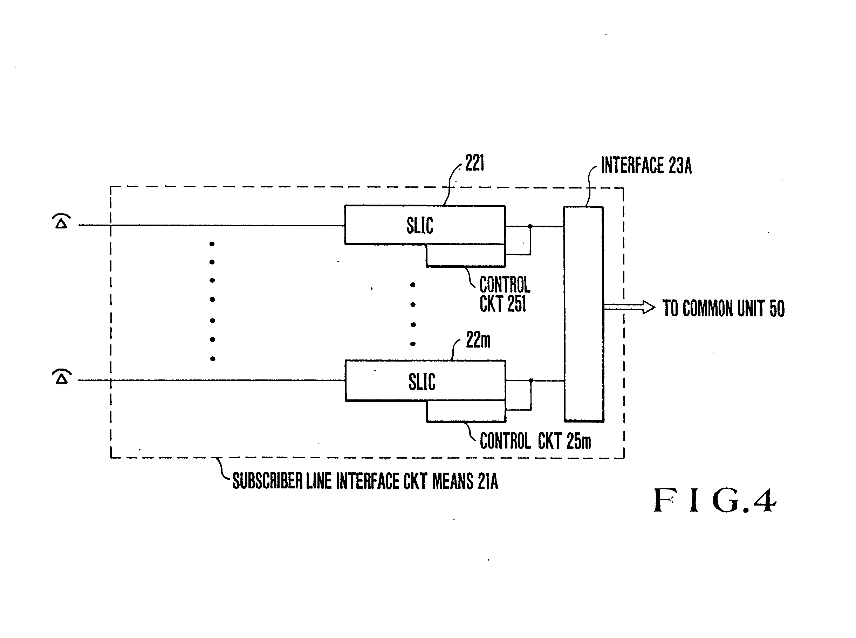

Fig. 4 shows the detail of the subscriber line interface circuit means 21A in which the interface 23 is divided into a plurality of groups and one of them is incorporated into the circuit means 21A. In Fig. 4, respective subscriber line interface circuits $22_1$—$22_m$ are provided with independent control circuits $25_1$—$25_m$ which extract only a control signal S supplied from an interface 23A at a predetermining timing. Based on the control signal $S_1$ to $S_m$, each control circuit performs such control functions as sending a call signal to a corresponding subscriber's line, detection of a response signal, transmission of a reverse signal, etc. The control signal $S_1$ to $S_m$ is sent to the interface 23A from the common unit 50 via a multiplexed line.

A state information regarding each subscriber's line, for example an information obtained by scanning the state of each subscriber's line at a predetermined timing is sent to the interface 23A through opposite routine at a timing at which the information is inserted into a specifically assigned channel. This information is sent to the common unit 50 through the interface 23A to be used as a control information. The extraction, and transmission of these control informations or signals, as well as the control operations of the telephone exchange based on these informations will not be described herein since they are well known in the art.

Regarding Fig. 4, it should be particularly noted that the interface 23A has been incorporated into the subscriber line interface circuit means 21A. Then, when compared with a case shown in Fig. 1, it is possible to decrease the number of the external terminals of the package, thus greatly simplifying the peripheral circuits.

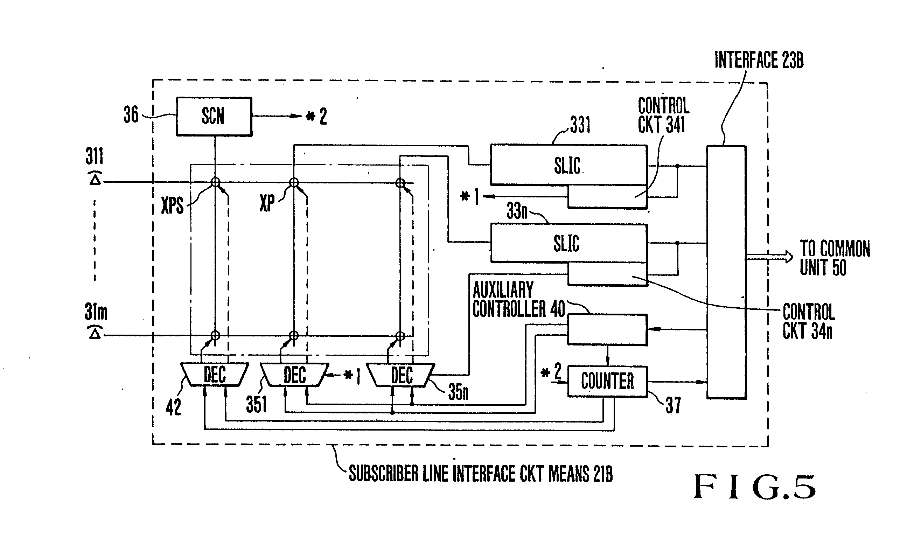

Fig. 5 shows in more detail the subscriber line interface circuit means 21B in which the interface 23 is incorporated into the circuit means 21B. In

Fig. 5 a one stage space division concentration switch 32 concentrates lines from the subscriber's terminals on the space division basis and selectively connects the lines to subscriber line interface circuits $33_1$ to $33_n$. The switch 32 has a matrix construction and at the cross-points of the matrix are connected well known high voltage IC switches which selectively connect one of the subscriber's terminals and one of the subscriber's lines by the outputs of decoders $35_1$ to $35n$.

For the purpose of checking the states of respective subscriber's terminals, sensors XPS are provided for the concentration switch 32. By controlling a decoder 42 from an auxiliary controller 40 through a counter 37, supervisory informations can be obtained. These informations are sent to an interface 23B via a route of a subscriber line scanning circuit 36—*2— the counter 37 where they are multiplexed and then sent to the common unit 50.

When supplied with a control signal from the common unit 50 via the interface 23B, the auxiliary controller 40 transfers the control signal to decoders $35_1$ and $35n$. The decoders $35_1$ to $35n$ turn on IC switch XP respectively in accordance with the control signal, when signals are supplied to the decoders from the control circuits $34_1$ to $34_n$. In addition to the control of the IC switch XP, the auxiliary controller 40 drives the counter 37 designating the order of scanning of the subscriber's line to send the output of the counter to decoder 42 so as to control the operation of the subscriber line scanning circuit 36.

The subscriber line interface circuits $33_1$ through $33_n$ have equal or substantial equal BORSCHT performances as the subscriber's circuits $22_1$—$22_m$ utilized in the subscriber's circuit means 21A described above, and control circuits $34_1$ through $34_n$ so as to control the subscriber's circuits $33_1$ through $33_n$ based on the control informations supplied from the interface 23B and to send out a state information regarding a subscriber's line to the interface 23B. The subscriber line interface circuits have the same construction and operation as those of the subscriber line interface circuits already described.

Regarding Fig. 5 it should be particularly noted that the interface 23B has been incorporated into the subscriber line interface circuit means 21B. Then, in the same manner as in the subscriber line interface circuit means 21A shown in Fig. 4, it is possible to decrease the number of the outside terminals of the package, thus simplifying the peripheral circuits.

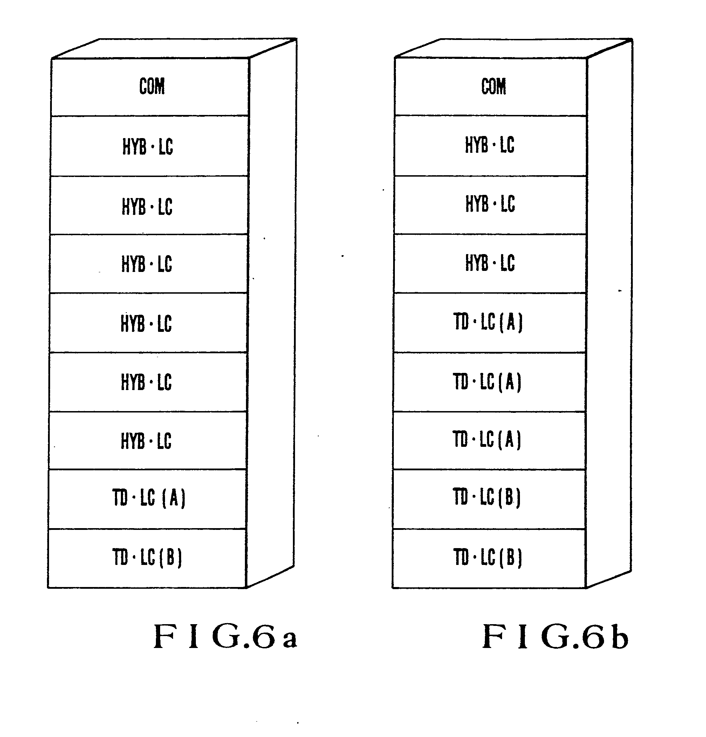

Figs. 6a and 6b show examples in which the subscriber line interface circuit means 21A of the first type, and a plurality of subscriber line interface circuit means 21B of the second type are assembled into a one stage unit and the number of units mounted on supporting frames are varied according to the number of traffic calls of a telephone exchange. In Figs. 6a and 6b, COM designates a common control unit, HYB·LC a unit including the subscriber line interface circuit means 21A and 21B of the first and the second type (usually about 256 lines/units), TD · LC(A) a unit for subscribers having high percentage of calls which includes the subscriber line interface circuit means 21A of the first type (usually about 128 lines per unit, and TD · LC(B) a unit for such special subscribers as public telephone sets which includes the subscriber line interface circuit means 21A of the first type (usually, about 64 lines per unit). In a telephone exchange office in which means percentage of the subscriber's calls is relatively low, a number of HYB · LC units are mounted as shown in Fig. 6a, whereas in a telephone office in which the percentage of subscriber's calls is high, the mixing ratio of the interface circuit means 21A and 21B of the HYB · LC unit is changed and the numbers of TD · LC(A) units and TD · LC(B) units mounted are increased. In addition, residence telephone sets having low percentage of calls are accommodated in the HYB · LC unit while other subscribers having high percentage of calls such as companies, offices, PBX, etc., are accommodated in the TD · LC(A) unit, while such special subscribers as public telephone sets are accommodated in the TD · LC(B) unit.

After installation, if it becomes necessary to change the degree of concentration as a result of measurement of the traffic data of a telephone office an existing circuit means is dismounted or plugged out and then subscriber line interface circuit means 21A and 21B are mounted or plugged in. Thus, it is possible to change the degree of concentration by such simple operations. Consequently, the versatility of the system is much higher than that of a prior art fixed system.

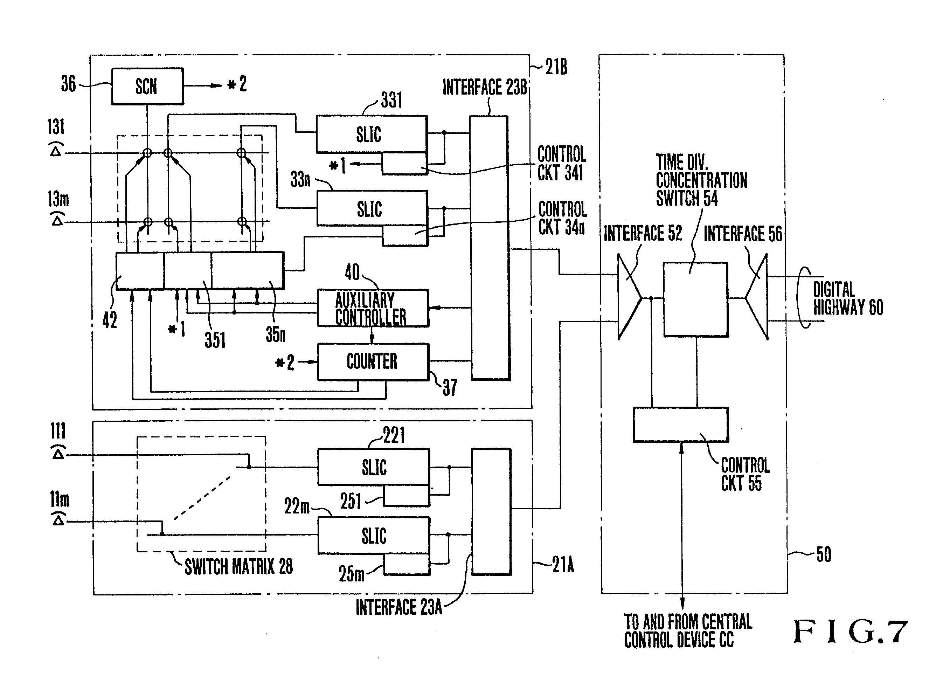

Fig. 7 illustrates a modification of the composite concentration system embodying the invention in which subscriber line interface circuit means 21A and 21B are controlled by a standardized software, thereby simplifying the expansion, maintainance and supervision of the software.

A telephone exchange for public telephones utilized in this system and controlled by a stored program is required to operate and maintain the software during a long life of the telephone exchange, so that it is advantageous to connect respective terminals to the digital highway under the control of a standardized software. For this reason, in this modification, corresponding to the space division concentration switch 32 contained in the subscriber line interface circuit means 21B of the second type, in the subscriber line interface circuit means 21A of the first type too, there is provided a fixed time division switch matrix 28 having a concentration ratio of 1:1 corresponding to the concentration switch 32.

With this construction, the central control device CC reads subscriber's data (usually stored in a main memory device of the central control device CC) corresponding to a terminal $13_1$ and based on the address number storing the data, it is judged that the data concerns a subscriber line interface circuit means 21B having the space concentration switch 32, whereby a control signal for driving the concentration switch 32 is sent to the controllers 40 and $34_1$ via the control circuit 55 of the common unit 50, time division concentration switch 54 and interfaces 52 and 23B. Then an IC switch at a cross-point XP of a matrix of the concentration switch 32 is closed to interconnect terminal $13_1$ and a specific channel of the digital highway 60.

When the data read out by the central control device CC belongs to a subscriber line interface circuit means 21A not provided with a space division concentration switch, the central control device CC sends a signal only to the controller $25_1$ via the control circuit ·55, time division concentration switch 54 and interfaces 52 and 23A, and therefore it is unnecessary to send out of a signal corresponding to a signal sent to the controller 40 of the subscriber line interface circuit means 21B. Although in the subscriber line interface circuit means 21A a switch 28 was provided corresponding to the space division concentration switch 32, actually, it is not necessary to provide such a switch matrix. Theoretically, it is considered that semifixed connections are made. Thus the fundamental concept of this invention lies in that a standardized design is made with a link matching program including a space division concentration switch 32 accommodating subscribers having low percentage of calls, that terminals not requiring the concentration switch 32 are considered to be connected semifixedly, that such concentration switch and its drive circuit are eliminated and that a cross-point drive instruction is not sent, or even when it is sent it is discarded.

As above described according to this embodiment, signals from subscribers having low percentage of calls are passed through the space division concentration switch 32 and then concentrated, whereas signals from special terminals or subscribers having high percentage of calls are directly concentrated, on the time division basis, without passing them through the concentration switch. Moreover, since the system is constructed to simultaneously control these signals, the system can be economically applied to traffic conditions of a wide range and the maintainance and supervision of the software are simple.

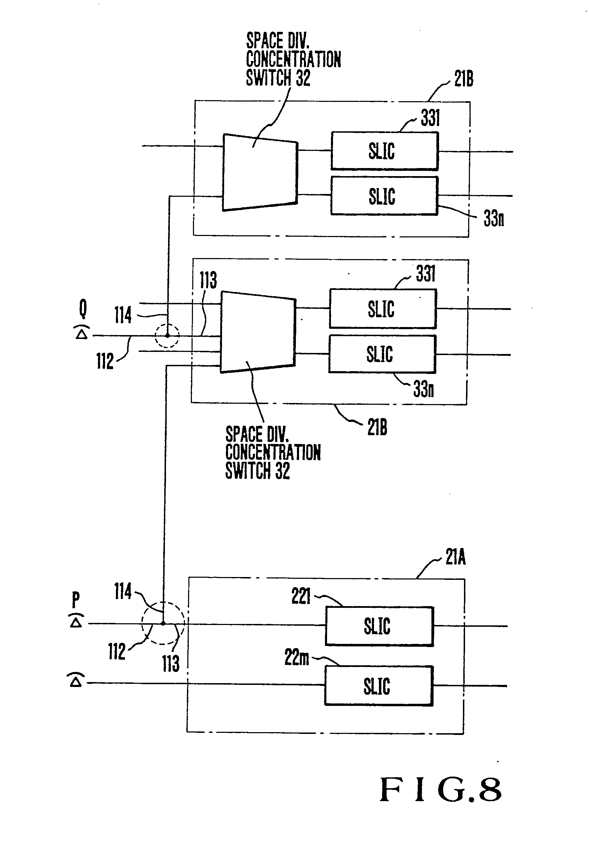

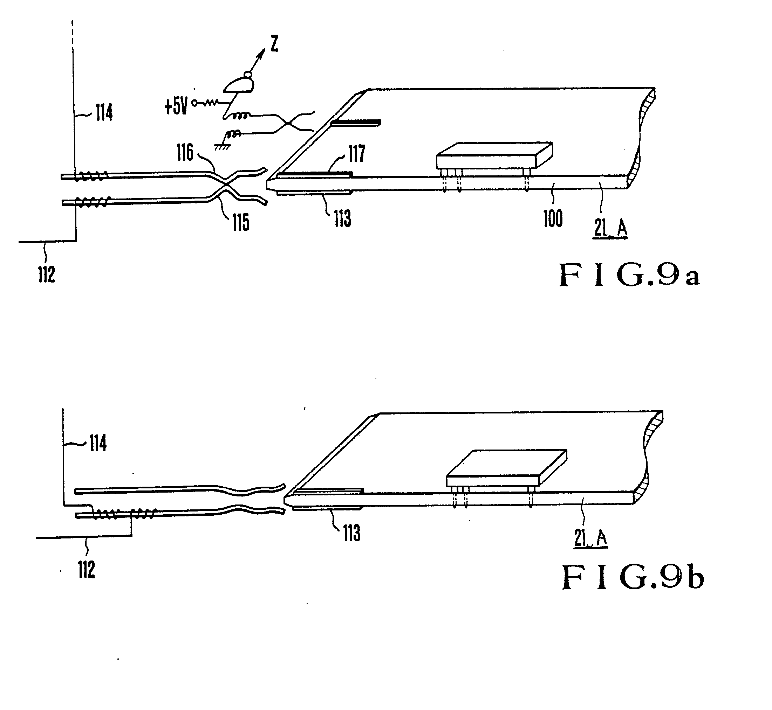

In still another modification of this invention shown in Fig. 8 telephone sets P and Q are important public subscribers and it is supposed that the telephone set P inherently contains subscriber line interface circuit means. A subscriber's line interface circuit means package accommodating the subscriber P also accommodates other subscribers. Should one of the packages become faulty, it is necessary to replace it with a new one thus resulting in an interruption of the service. To prevent this, in the modification shown in Fig. 8, the talking line of the subscriber P is connected to the main subscriber line interface circuits $22_1$ via a line $11_3$ and is also connected to one input line of a line interface circuit means 21B. With this construction, so long as the subscriber line interface circuit $22_1$ is normal, such services as connections and speach are made through this subscriber line interface circuit and until a package 21A to which the subscriber line interface circuit $22_1$ belong becomes faulty or exchanged the service can be maintained through a routine including the subscriber line interface circuit means 21B. The detail of the connection of the elements bounded by dot and dash lines is shown in Figs. 9a and 9b. In a case shown in Fig. 9a, while the package 21A is being inserted in the package contacts 115 and 116 are separated, and lines 112 and 114 are disconnected. The contact 116 is connected to a floated or grounded terminal 117 formed on one surface of the board 100 of the package 21A, whereas the contact 115 is connected to a contact 113 so that the software can process calls under normal state. For exchanging a faulty package 21A, when it is drawn out contacts 115 and 116 contact with each other so as to connect the terminal $11_1$ to the package 21B. At the same time, change the position of an accommodated subscriber and continuation of the service are made possible by informing to the central control device CC application of a command signal by an operator or detection of the address position of a withdrawn package (an output Z shown in Fig. 9a becomes "1") when the package is withdrawn. In the case shown in Fig. 9b, call detection outputs of a subscriber are produced from two portions. As a consequence, a program is prepared which makes effective only a detected output on the side of the main accommodating position under normal condition whereas the detected output on the side of an auxiliary accommodating position is made not effective, and when the main side becomes faulty, the program is switched by software.

In the foregoing, an important subscriber P in which a package 21A and a package 21B are apparently connected in multiple the other important subscriber Q in which two packages are connected in multiple can be treated similarly for increasing reliability.

Moreover it is noted that the invention includes also a composite concentration system as claimed in anyone of the claims 1 to 5, wherein said first subscriber line interface circuit means 21A comprises a time division switch 28 fixedly provided in a preceding stage of each subscriber's line interface circuit $22_{1...m}$.

**Claims**

1. A composite concentration system (10) having a time division concentration switch (54) collecting or distributing signals from or to subscriber lines, partially via space division concentration switches (32) characterized in that it comprises:

a) a first subscriber line interface circuit means (21A) of a first type which connects subscriber's lines ($11_{1...m}$, $12_{1...m}$, $14_{1...m}$) directly to subscriber line interface circuits ($22_{1...m}$, the subscriber line interface circuit means (21A) of the first type comprising a number of input terminals directly connected to respective subscriber line interface circuits ($22_{1...m}$);

b) a second subscriber line interface circuit means (21B) of a second type which connects subscriber's lines ($13_{1...m}$, $15_{1...m}$) to subscriber line interface circuits ($33_{1...n}$) via one of said space division concentration switches (32), the subscriber line interface circuit means (21B) of the second type comprising a number of input terminals connected to respective input terminals of said one of said space division concentration switches (32), said one of said space division concentration switches (32), and subscriber line interface circuits ($33_{1...n}$) connected to respective outputs of said one of said space division concentration switches (32);

c) the number of the input terminals of said first subscriber line interface circuit means (21A) being equal to that of input terminals of said second subscriber line interface circuit means (21B), the subscriber line interface circuit means of the first and second type being in the form of plug-in units which are interchangeably connectible to said number of subscriber's lines;

d) each of said subscriber line interface circuits ($22_{1...m}$, $33_{1...n}$) in each of said first and second subscriber line interface circuit means (21A, 21B) including means for converting a voice signal an analogue form applied to one of said input terminals into a digitized signal and converting a digitized signal from said time division concentration switch into a voice signal in analogue form; and

e) a switching interface means (23, 52) for assigning digitized signals from said subscriber line interface circuits ($22_{1...m}$; $33_{1...n}$) to channels to be sent to said time division concentration switch (54) and for assigning said digitized signals from said time division concentration switch (54) to respective ones of said subscriber line interface circuits.

2. The composite concentration system according to claim 1 wherein each plug-in unit is formed on a printed substrate (100).

3. The composite concentration system according to claim 1 or 2 characterized in that each of said first and second subscriber line interface circuit means (21A, 21B) comprises multiplexing means (23, 23A, 23B) provided on the output side of each subscriber line interface circuit (21A, 21B), said multiplexing means forming part of said switching interface means.

4. The composite concentration system according to claim 1, 2 or 3 characterized in that it further comprises means (113, 115, 116, 117) for connecting one of the subscriber's terminals belonging to one subscriber line interface circuit means (21A, 21B) to an input side of the other subscriber line interface circuit means (21A, 21B).

5. The composite concentration system according to claim 4, characterized in that said connecting means (113, 115, 116, 117) comprises a switch contact, which when one of said subscriber line interface circuit means (21A, 21B) to which subscriber's terminals belong is removed, connects said subscriber's terminals to the input side of the other subscriber line interface circuit means (21A, 21B).

## Patentansprüche

1. Kombiniertes Konzentrationssystem (10) mit einem Zeitteilungskonzentrationsschalter (54), der Signale, die von Teilnehmerleitungen kommen oder zu diesen gehen, sammelt bzw. verteilt, teilweise über Raumteilungskonzentrationsschalter (32), dadurch gekennzeichnet, daß es folgendes aufweist:

a) ein erstes Teilnehmerleitungsinterfaceschaltungsmittel (21A) einer ersten Art, das Teilnehmerleitungen ($11_{1...m}$, $12_{1...m}$, $14_{1...m}$) direkt mit Teilnehmerleitungsinterfaceschaltungen ($22_{1...m}$) verbindet, welches Teilnehmerleitungsinterfaceschaltungsmittel (21A) der ersten Art eine Vielzahl von Eingangsanschlüssen aufweist, die direkt an entsprechende Teilnehmerleitungsinterfaceschaltungen ($22_{1...m}$) angeschlossen sind;

b) ein zweites Teilnehmerleitungsinterfaceschaltungsmittel (21B) einer zweiten Art, das Teilnehmerleitungen ($13_{1...m}$, $15_{1...m}$) mit Teilnehmerleitungsinterfaceschaltungen ($33_{1...n}$) über einen der Raumteilungskonzentrationsschalter (32) verbindet, wobei das Teilnehmerleitungsinterfaceschaltungsmittel (21B) der zweiten Art eine Anzahl von Eingangsanschlüssen, die mit den Eingangsanschlüssen des besagten einen der Raumteilungskonzentrationsschalter (32) verbunden sind, den besagten einen der Raumteilungskonzentrationsschalter (32) und Teilnehmerinterfaceschaltungen ($33_{1...n}$) aufweist, die an entsprechende Ausgänge des einen besagten der Raumteilungskonzentrationsschalter (32) angeschlossen sind;

c) wobei die Zahl der Eingangsanschlüsse des ersten Teilnehmerleitungsinterfaceschaltungsmittel (21A) gleich der Zahl der Eingangsanschlüsse des zweiten Teilnehmerleitungsinterfaceschaltungsmittel (21B) ist, und die Teilnehmerleitungsinterfaceschaltungsmittel der ersten und zweiten Art die Form von Einschubeinheiten aufweisen, die austaschbar mit der Anzahl der Teilnehmerleitungen verbindbar sind;

d) wobei jede der Teilnehmerleitungsinterfaceschaltungen ($22_{1...m}$, $33_{1...n}$) in jedem der ersten und zweiten Teilnehmerleitungsinterfaceschaltungsmittel (21A, 21B) Mittel aufweist, um ein Sprachsignal, das in Analogform einem der Eingangsanschlüsse zugeführt wird, in ein digitales Signal und ein digitales Signal des Zeitteilungskonzentrationsschalters in ein Sprachsignal in Analogform zu verwandeln;

e) und daß ein schaltendes Interfacemittel (23, 52) vorgesehen ist, um digitale Signale von den Teilnehmerleitungsinterfaceschaltungen ($22_{1...m}$; $33_{1...n}$) auf Kanäle zu schalten, die zu dem Zeitteilungskonzentrationsschalter (54) gesendet werden, und um die digitalen Signale des Zeitteilungskonzentrationsschalters (54) entprechenden der Teilnehmerleitungsinterfaceschaltungen zuzuordnen.

2. Konzentrationssystem nach Anspruch 1, bei dem jede Einschubeinheit auf einem bedruckten Substrat (100) ausgebildet ist.

3. Konzentrationssystem nach Anspruch 1 oder 2, dadurch gekennzeichnet, daß jedes der ersten und zweiten Teilnehmerleitungsinterfaceschaltungsmittel (21A, 21B) Multiplexiermittel (23, 23A, 23B) aufweist, die an der Ausgangsseite jeder Teilnehmerleitungsinterfaceschaltung (21A, 21B) vorgesehen sind, welche Multiplexiermittel einen Teil der schaltenden Interfacemittel darstellen.

4. Konzentrationssystem nach Anspruch 1, 2 oder 3, dadurch gekennzeichnet, daß des weiteren Mittel (113, 115, 116, 117) aufweist, um einen der Teilnehmeranschlüsse, die zu einen Teilnehmerleitungsinterfaceschaltungsmittel (21A, 21B) gehören, mit der Ausgangsseite des anderen Teilnehmerleitungsinterfaceschaltungsmittel (21A, 21B) zu verbinden.

5. Konzentrationssystem nach Anspruch 4, dadurch gekennzeichnet, daß die Anschlußmittel (113, 115, 116, 117) einen Schaltkontakt aufweisen, der die Teilnehmeranschlüsse mit der Eingangsseite des anderen Teilnehmerleitungsinterfaceschaltungsmittel (21A, 21B) verbindet, wenn eines der Teilnehmerleitungsinterfaceschaltungsmittel (21A, 21B) zu dem die Teilnehmeranschlüsse gehören, entfernt wird.

## Revendications

1. Système de concentration combiné (10) ayant un commutateur de concentration à division de temps (54) collectant les signaux issus de lignes d'abonnés, ou répartissant ces signaux vers les lignes d'abonnés, en partie par l'intermédiaire de commutateurs de concentration à division d'espace (32); le système à concentration combinée étant caractérisé en ce qu'il comprend:

a) un premier moyen formant circuit d'interfaces de lignes d'abonnés (21A), d'une première catégorie, qui relie les lignes d'abonnés ($11_{1...m}$, $12_{1...m}$, $14_{1...m}$) directement aux circuits d'interfaces de lignes d'abonnés ($22_{1...m}$), le moyen formant circuits d'interfaces de lignes d'abonnés (21A), de la première catégorie, comprenant un certain nombre de bornes d'entrée reliées directement aux circuits respectifs d'interfaces de lignes d'abonnés ($22_{1...m}$);

b) un seconde moyen formant circuits d'interfaces de lignes d'abonnés (21B), d'une seconde catégorie, qui relie les lignes d'abonnés ($13_{1...m}$, $15_{1...m}$) aux circuits d'interfaces de lignes d'abonnés ($33_{1...n}$) par l'intermédiaire de l'un des commutateurs de concentration à division d'espace (32), le moyen formant circuits d'interfaces de lignes d'abonnés (21B), de la seconde catégorie, comprenant:

un certain nombre de bornes d'entrée reliées aux bornes d'entrée respectives de l'un desdits commutateurs de concentration à division d'espace (32),

l'une desdits commutateurs de concentration à division d'espace (32),

et des circuits d'interfaces de lignes d'abonnés (33₁...ₙ) reliés aux sorties respectives de l'un desdits commutateurs de concentration à division d'espace (32);

c) le nombre des bornes d'entrée dudit premier moyen formant circuits d'interfaces de lignes d'abonnés (21A) étant égal à celui des bornes d'entrée dudit second moyen formant circuits d'interfaces de lignes d'abonnés (21B), lesdits moyens formant circuits d'interfaces de lignes d'abonnés de la première et de la seconde catégories étant du type fiche de branchement, lesdites fiches étant susceptibles d'être connectées, de façon interchangeable, auxdites nombreuses lignes d'abonnés;

d) chacun desdits circuits d'interfaces de lignes d'abonnés (22₁...ₘ, 33₁...ₙ) de chacun desdits premier et second moyens formant circuits d'interfaces de lignes d'abonnés (21A, 21B) comprenant des moyens pour convertir un signal voix de forme analogique, appliqué à l'une desdites bornes d'entrée, en un signal numérique et, convertir un signal numérique, issu dudit commutateur de concentration à division de temps, en un signal voix de forme analogique; et

e) un moyen d'interface de commutation (23, 52) pour attribuer les signaux numériques, issus desdits circuits d'interfaces de lignes d'abonnés (22₁...ₘ, 33₁...ₙ), aux canaux à envoyer vers ledit commutateur de concentration à division de temps (54) et pour attribuer lesdits signaux numériques, issus dudit commutateur à division de temps (54), à l'un au moins desdits circuits respectifs d'interfaces de lignes d'abonnés.

2. Système de concentration combiné selon la revendication 1, dans lequel chacune desdites fiches de branchement est formé sur un substrat imprimé (100).

3. Système de concentration combiné selon la revendication 1, ou la revendication 2, caractérisé en ce que chacun desdits premier et second moyens formant circuits d'interfaces de lignes d'abonnés (21A, 21B) comprend des moyens de multiplexage (23, 23a, 23b) prévus sur la sortie de chacun des circuits d'interfaces de lignes d'abonnés (21A, 21B) lesdits moyens de multiplexage formant une partie desdits moyens d'interfaces de commutation.

4. Système de concentration combiné selon l'une quelconque des revendications précédentes, caractérisé en ce que ledit système comprend, en outre, des moyens (113, 115, 116, 117) pour relier l'un des terminaux d'abonnés appartenant à l'un des moyens formant circuits d'interfaces de lignes d'abonnés (21A, 21B), à une entrée de l'autre moyen formant circuits d'interfaces de lignes d'abonnés (21A, 21B).

5. Système de concentration combiné selon la revendication 4, caractérisé en ce que lesdits moyens de liaison (113, 115, 116, 117) comprennent un contact du type commutateur, qui relie lesdits terminaux d'abonnés à l'entrée de l'autre moyen formant circuits d'interfaces de lignes d'abonnés (21A, 21B), lorsque l'un desdits moyens formant circuits d'interfaces de lignes d'abonnés (21A, 21B) auquel appartient le terminal de l'abonné, est enlevé.

FIG.1

DIGITAL HIGHWAY 60

TIME DIVISION CONCENTRATION COMMON UNIT 50

INTERFACE 56

54  TIME DIVISION CONCENTRATION SWITCH

55  CONTROL CKT

TO AND FROM CENTRAL CONTROL DEVICE CC

INTERFACE 52

SLIE 20a

INTERFACE 23

221  22m  221  222  22m  331  33n

SLIC  SLIC  SLIC  SLIC  SLIC  SLIC  SLIC

21A  21A  21B

11  11m  12  122  12m  13  13m

SPACE DIV. CONCENTRATION SWITCH 32

INTERFACE

SLIE 20b

SLIC  SLIC  SLIC  SLIC

21B

21A

14  14m  15  15m

SPACE DIV. CONCENTRATION SWITCH 32

1

INTERFACE 23

TO COMMON UNIT 50

221

111
112

V1, S1
V2, S2
V3, S3
V4, S4
V5, S5
V6, S6
V7, S7
V8(Vm), S8(Sm)

ℓ1A
ℓ2A

11m

21A   22m

331

33n

V1, S1
(Vn), (Sn)

ℓ1B
ℓ2B

131
132

138

32

21B

# FIG.2

1 FRAME

| V1 | S1 | V2 | S2 | | Vm | Sm | V1 | S1 |

221   222   22m

# FIG.3

2

FIG.4

0 075 305

FIG.5

INTERFACE 23B

CONTROL CKT 341

36 SCN → *2

311

XPS    XP

331 SLIC

*1

33n SLIC

TO COMMON UNIT 50

CONTROL CKT 34n

31m

AUXILIARY CONTROLLER 40

42   DEC   DEC  *1   DEC   35n

351

*2   COUNTER   37

SUBSCRIBER LINE INTERFACE CKT MEANS 21B

0 075 305

| COM |
| HYB · LC |
| HYB · LC |
| HYB · LC |
| HYB · LC |
| HYB · LC |
| HYB · LC |
| TD · LC (A) |
| TD · LC (B) |

# F I G.6 a

| COM |
| HYB · LC |
| HYB · LC |
| HYB · LC |
| TD · LC (A) |
| TD · LC (A) |
| TD · LC (A) |
| TD · LC (B) |
| TD · LC (B) |

# F I G.6 b

FIG.7

SPACE DIV.
CONCENTRATION
SWITCH 32

FIG.8

F I G.9a

F I G.9b

8